# EUROPEAN PATENT APPLICATION

(11) **EP 4 716 155 A1**
(43) Date of publication of application: **25.03.2026**
(21) Application number: 24830474.3
(22) Date of filing: 11.06.2024
(51) Int. Cl.: H04L 9/40, H04L 41/0823, H04W 12/06

(54) **SECURITY PROCESSING METHOD, APPARATUS AND STORAGE MEDIUM**

(30) Priority: 28.06.2023 CN 202310790144
(71) Applicant: Huawei Technologies Co., Ltd., Shenzhen, Guangdong 518129 (CN)
(72) Inventor: WANG, Qing, Shenzhen, Guangdong 518129 (CN); SUN, Desheng, Shenzhen, Guangdong 518129 (CN); DING, Li, Shenzhen, Guangdong 518129 (CN)
(74) Representative: Goddar, Heinz J.
(86) International application number: PCT/CN2024/098431
(87) International publication number: WO 2025/001828

(57) **Abstract**

This application discloses a security handling method and apparatus, and a storage medium, and relates to the communication field. The method includes: A first device performs a security handling operation with a second device, where the security handling operation includes one or more of the following operations: mutual authentication or key agreement. After successfully performing the security handling operation, the first device monitors a status of a link between the first device and the second device. The first device re-performs the security handling operation with the second device based on a first moment, where the first moment is a moment at which it is monitored that the status of the link changes from an online state to an offline state. This application can improve communication security.

## Description

This application claims priority to Chinese Patent Application No. 202310790144.0, filed on June 28, 2023 and entitled "SECURITY HANDLING METHOD AND APPARATUS, AND STORAGE MEDIUM", which is incorporated herein by reference in its entirety.

### TECHNICAL FIELD

This application relates to the communication field, and in particular, to a security handling method and apparatus, and a storage medium.

### BACKGROUND

For any two Ethernet devices, for ease of description, the two Ethernet devices are referred to as a first device and a second device. To improve communication security between the first device and the second device, security handling needs to be performed on the first device and the second device. For example, the security handling includes mutual authentication, and the first device and the second device perform mutual authentication, to authenticate whether the first device and the second device are mutually legitimate devices. After it is authenticated that the first device and the second device are mutually legitimate devices, the first device and the second device perform data transmission.

For another example, the security handling includes key agreement. Key agreement means that a key generation device is selected from the first device and the second device. It is assumed that the first device is selected as the key generation device, and the first device generates a key and sends the key to the second device. Then, data to be transmitted between the first device and the second device may be encrypted by using the key.

The security handling may include the two processes: mutual authentication and key agreement. To be specific, the first device and the second device perform mutual authentication. After the first device and the second device are mutually legitimate devices through mutual authentication, the first device and the second device obtain a key through key agreement, and encrypt data to be transmitted by using the key.

After the first device and the second device perform mutual authentication, the second device goes offline abnormally, but a port on the first device for communicating with the second device is still open. In this case, an illegitimate device may access the port, causing a great security problem. Alternatively, after the illegitimate device accesses the port, the first device sends a key through the port. In this case, the illegitimate device receives the key, resulting in key leakage and a great security problem.

### SUMMARY

This application provides a security handling method and apparatus, and a storage medium, to improve communication security. The technical solutions are as follows:

According to a first aspect, this application provides a security handling method. In the method, a first device performs a security handling operation with a second device, and the security handling operation includes one or more of the following operations: mutual authentication or key agreement. After successfully performing the security handling operation, the first device monitors a status of a link between the first device and the second device. The first device re-performs the security handling operation with the second device based on a first moment, where the first moment is a moment at which it is monitored that the status of the link changes from an online state to an offline state.

When the second device is replaced with an illegitimate device or an optical module connected to the second device is replaced with an illegitimate optical module, the status of the link between the first device and the second device changes from the online state to the offline state, and the first device can monitor the change of the status of the link in time at the first moment, and therefore can re-perform mutual authentication with the second device in time. In this way, the illegitimate device or the illegitimate optical module has no time to communicate with the first device, to improve communication security. Alternatively, when the second device is replaced with an illegitimate device, the status of the link between the first device and the second device changes from the online state to the offline state, and the first key may have been leaked. The first device can monitor the change of the status of the link in time at the first moment, and therefore can re-perform key agreement with the second device in time, and communication is performed by using the second key, to improve communication security.

In a possible implementation, the security handling operation includes mutual authentication, and the first device re-performs mutual authentication with the second device at the first moment, that is, when the status of the link changes from the online state to the offline state, the first device re-performs mutual authentication with the second device. In other words, when the second device is replaced with the illegitimate device or the optical module connected to the second device is replaced with the illegitimate optical module, the first device re-performs mutual authentication with the second device in time, to improve communication security.

In another possible implementation, if the status of the link has changed to the online state at a second moment, the first device re-performs mutual authentication with the second device, where the second moment is later than the first moment, and a time difference between the first moment and the second moment is a specified difference. Alternatively, if the status of the link is still the offline state at the second moment, the first device re-performs mutual authentication with the second device when monitoring, after the second moment, that the status of the link changes to the online state. The second device may frequently go online or offline. When the second device frequently goes online or offline, there is a delay in re-performing mutual authentication between the first device and the second device. This can avoid frequent mutual authentication, and save computing resources and bandwidth resources.

In another possible implementation, the first device sends a first random number to the second device. The first device receives first authentication information sent by the second device, where the first authentication information includes one or more of the following: a second random number of the second device, a device identifier of the second device, or first encrypted information, and the first encrypted information is obtained by encrypting the first random number, the second random number, and the device identifier of the second device. After successfully authenticating the second device based on the first authentication information, the first device sends second authentication information to the second device, where the second authentication information includes one or more of the following: a device identifier of the first device or second encrypted information, the second encrypted information is obtained by encrypting the second random number and the device identifier of the first device, and the second device is configured to authenticate the first device based on the second authentication information.

In another possible implementation, the first encrypted information is obtained by encrypting a module identifier of a first optical module, the first random number, the second random number, and the device identifier of the second device, and the first optical module is an optical module that is located on the link and connected to the second device. The first device decrypts the first encrypted information to obtain the module identifier of the first optical module. When determining, based on the module identifier of the first optical module, that the first optical module is legitimate, the first device encrypts the first random number, the second random number, the device identifier of the second device, and the module identifier of the first optical module to obtain third encrypted information. When the first encrypted information is the same as the third encrypted information, the first device successfully authenticates the second device. Because the first encrypted information includes the module identifier of the first optical module, when the first optical module is replaced with the illegitimate optical module, it is ensured that authentication between the first device and the second device fails, and communication between the first device and the illegitimate optical module is avoided, to improve communication security.

In another possible implementation, the second encrypted information is obtained by encrypting a module identifier of a second optical module, the second random number, and the device identifier of the first device, and the second optical module is an optical module that is located on the link and connected to the first device. Because the second encrypted information includes the module identifier of the second optical module, when the second optical module is replaced with the illegitimate optical module, it is ensured that authentication between the first device and the second device fails, and communication between the second device and the illegitimate optical module is avoided, to improve communication security.

In another possible implementation, the first device receives at least one first multiframe sent by the second device, where the at least one first multiframe carries the first authentication information.

In another possible implementation, each of the at least one first multiframe includes m alignment markers AMs, m is an integer greater than 1, and a bit that carries the first authentication information is an idle reserved bit included in a 2^{nd} AM to an m^{th} AM in each first multiframe.

In another possible implementation, the security handling operation includes key agreement, a result obtained by performing key agreement between the first device and the second device includes a first key, and the first key is an encryption/decryption key for data transmitted between the first device and the second device. A result obtained by re-performing key agreement between the first device and the second device includes a second key, and the encryption/decryption key for data transmitted between the first device and the second device changes from the first key to the second key. When the second device is replaced with the illegitimate device, the status of the link between the first device and the second device changes from the online state to the offline state, and the first key may have been leaked. The first device can monitor the change of the status of the link in time at the first moment, and therefore can re-perform key agreement with the second device in time. If agreement between the first device and the illegitimate device fails, the first device stops communicating with the illegitimate device. If the first device and the second device agree on the second key, communication is performed by using the second key, to improve communication security.

In a possible implementation, the first device re-performs key agreement with the second device at the first moment, that is, when the status of the link changes from the online state to the offline state, the first device re-performs key agreement with the second device. In other words, when the second device is replaced with the illegitimate device, the first device re-performs key agreement with the second device in time, to improve communication security.

In another possible implementation, if monitoring, at the second moment, that the status of the link has changed to the online state, the first device re-performs key agreement with the second device, where the second moment is later than the first moment, and the time difference between the first moment and the second moment is the specified difference; or if monitoring, at the second moment, that the status of the link is still the offline state, the first device re-performs key agreement with the second device when monitoring, after the second moment, that the status of the link changes to the online state. The second device may frequently go online or offline. When the second device frequently goes online or offline, there is a delay in re-performing key agreement between the first device and the second device. This can avoid frequent key agreement, and save computing resources and bandwidth resources.

In another possible implementation, the first device sends a first priority to the second device, where the first priority is a priority of the first device. The first device receives a second priority sent by the second device, where the second priority is a priority of the second device. The first device generates the first key when the first priority is higher than the second priority. The first device sends the first key to the second device.

In another possible implementation, the first device sends at least one second multiframe to the second device, where the at least one second multiframe carries the first priority.

In another possible implementation, each of the at least one second multiframe includes n AMs, n is an integer greater than 1, and a bit that carries the first priority is an idle reserved bit included in a 2^{nd} AM to an n^{th} AM in each second multiframe.

According to a second aspect, this application provides a security handling apparatus, configured to perform the method in any one of the first aspect or the possible implementations of the first aspect. Specifically, the apparatus includes a unit configured to perform the method in any one of the first aspect or the possible implementations of the first aspect.

According to a third aspect, this application provides a security handling device, including at least one processor and a memory. The at least one processor is configured to be coupled to the memory, and read and execute instructions in the memory, to implement the method in any one of the first aspect or the possible implementations of the first aspect.

According to a fourth aspect, this application provides a computer program product. The computer program product includes a computer program stored in a computer-readable storage medium, and the computer program is loaded by a processor to implement the method in any one of the first aspect or the possible implementations of the first aspect.

According to a fifth aspect, this application provides a computer-readable storage medium, configured to store a computer program. The computer program is loaded by a processor to perform the method in any one of the first aspect or the possible implementations of the first aspect.

According to a sixth aspect, this application provides a chip. The chip includes a memory and a processor. The memory is configured to store computer instructions, and the processor is configured to invoke the computer instructions from the memory and run the computer instructions, to perform the method in any one of the first aspect or the possible implementations of the first aspect.

### BRIEF DESCRIPTION OF DRAWINGS

FIG. 1 is a diagram of a security handling solution according to an embodiment of this application;
FIG. 2 is a diagram of a network architecture according to an embodiment of this application;
FIG. 3 is a flowchart of a mutual authentication method according to an embodiment of this application;
FIG. 4 is a flowchart of a key agreement method according to an embodiment of this application;
FIG. 5 is a flowchart of a security handling method according to an embodiment of this application;
FIG. 6 is a flowchart of another mutual authentication method according to an embodiment of this application;
FIG. 7 is a diagram of a structure of a multiframe according to an embodiment of this application;
FIG. 8 is a flowchart of another security handling method according to an embodiment of this application;
FIG. 9 is a flowchart of another key agreement method according to an embodiment of this application;
FIG. 10 is a diagram of a structure of a security information frame according to an embodiment of this application;
FIG. 11 is a flowchart of another security handling apparatus method according to an embodiment of this application;
FIG. 12 is a diagram of a structure of another security handling apparatus according to an embodiment of this application; and
FIG. 13 is a diagram of a structure of a device according to an embodiment of this application.

### DESCRIPTION OF EMBODIMENTS

The following further describes in detail embodiments of this application with reference to the accompanying drawings.

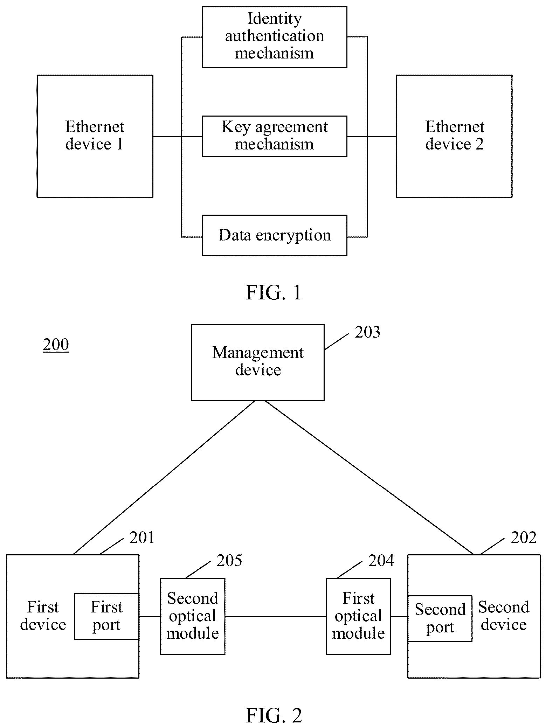

Refer to FIG. 1. Ethernet security handling solutions may include three solutions, and the following separately describes the three solutions.

A first solution is an identity authentication mechanism. The identity authentication mechanism means that two Ethernet devices that communicate with each other perform mutual authentication. After the mutual authentication succeeds, the two Ethernet devices determine that the two Ethernet devices are mutually legitimate devices, to ensure that the two Ethernet devices that communicate with each other are legitimate devices. For example, for an Ethernet device 1 and an Ethernet device 2 shown in FIG. 1, the Ethernet device 1 and the Ethernet device 2 perform mutual identity authentication by using a mutual authentication procedure, to ensure that the Ethernet device 2 communicating with the Ethernet device 1 is a legitimate device and the Ethernet device 1 communicating with the Ethernet device 2 is a legitimate device.

A second solution is a key agreement mechanism. The key agreement mechanism is that two Ethernet devices that communicate with each other agree on a key with each other, where the key is an encryption/decryption key used for data transmitted between the two Ethernet devices, and provides a secure key source for a data encryption/decryption process. For example, for the Ethernet device 1 and the Ethernet device 2 shown in FIG. 1, the Ethernet device 1 and the Ethernet device 2 agree on a key by using the key agreement mechanism, where the key is used to encrypt data transmitted between the Ethernet device 1 and the Ethernet device 2.

A third solution is data encryption. Data encryption means that data transmitted between the two Ethernet devices is encrypted by using an agreed key, to protect confidentiality of client data and an upper-layer protocol from being leaked. For example, for the Ethernet device 1 and the Ethernet device 2 shown in FIG. 1, the Ethernet device 1 may encrypt, by using an agreed key, first data to be sent to the Ethernet device 2, to obtain first encrypted data, and send the first encrypted data to the Ethernet device 2. The Ethernet device 2 may decrypt the first encrypted data by using the key, to obtain the first data. Similarly, the Ethernet device 2 encrypts, by using the agreed key, second data to be sent to the Ethernet device 1, to obtain second encrypted data, and sends the second encrypted data to the Ethernet device 1. The Ethernet device 1 may decrypt the second encrypted data by using the key, to obtain the second data.

In some embodiments, for two Ethernet devices, the two Ethernet devices may first perform identity authentication through mutual authentication, and after it is authenticated that the two Ethernet devices are mutually legitimate devices, the two Ethernet devices may communicate with each other in plaintext or may communicate with each other in ciphertext.

When the two Ethernet devices communicate with each other in plaintext, after it is authenticated that the two Ethernet devices are mutually legitimate devices, it is considered that communication between the two Ethernet devices is secure. Therefore, one Ethernet device may directly send unencrypted data to the other Ethernet device.

For example, for the Ethernet device 1 and the Ethernet device 2 shown in FIG. 1, after it is authenticated that the Ethernet device 1 and the Ethernet device 2 are mutually legitimate devices, the Ethernet device 1 may not encrypt the first data to be sent to the Ethernet device 2, but directly send the first data to the Ethernet device 2. Similarly, the Ethernet device 2 may not encrypt the second data to be sent to the Ethernet device 1, but directly send the second data to the Ethernet device 1.

When the two Ethernet devices communicate with each other in ciphertext, after it is authenticated that the two Ethernet devices are mutually legitimate devices, the two Ethernet devices perform key agreement to agree on a key. In this way, one Ethernet device encrypts, by using the key, data to be sent to the other Ethernet device to obtain ciphertext, and sends the ciphertext to the other Ethernet device.

For example, for the Ethernet device 1 and the Ethernet device 2 shown in FIG. 1, after it is authenticated that the Ethernet device 1 and the Ethernet device 2 are mutually legitimate devices, the Ethernet device 1 and the Ethernet device 2 perform key agreement to agree on a key. The Ethernet device 1 encrypts, by using the key, the first data to be sent to the Ethernet device 2, to obtain the first encrypted data, and sends the first encrypted data to the Ethernet device 2. The Ethernet device 2 encrypts, by using the key, the second data to be sent to the Ethernet device 1, to obtain the second encrypted data, and sends the second encrypted data to the Ethernet device 1.

In some embodiments, for two Ethernet devices, identity authentication may not be performed on the two Ethernet devices, and the two Ethernet devices directly perform key agreement to obtain a key. In this way, one Ethernet device encrypts, by using the key, data to be sent to the other Ethernet device to obtain ciphertext, and sends the ciphertext to the other Ethernet device.

Optionally, the two Ethernet devices may be devices belonging to a same company or a same organization, or the like, and the two devices are legitimate devices, and identity authentication may not be performed. For example, it is assumed that the Ethernet device 1 and the Ethernet device 2 shown in FIG. 1 are two devices of a same organization, and the Ethernet device 1 and the Ethernet device 2 perform key agreement to agree on a key. The Ethernet device 1 encrypts, by using the key, the first data to be sent to the Ethernet device 2, to obtain the first encrypted data, and sends the first encrypted data to the Ethernet device 2. The Ethernet device 2 encrypts, by using the key, the second data to be sent to the Ethernet device 1, to obtain the second encrypted data, and sends the second encrypted data to the Ethernet device 1.

Refer to FIG. 2. An embodiment of this application provides a network architecture 200. The network architecture 200 includes a first device 201, a second device 202, and a management device 203. Both the first device 201 and the second device 202 communicate with the management device 203.

The first device 201 and the second device 202 may perform security handling, and the management device 203 may provide the first device 201 and the second device 202 with information needed for security handling.

In some embodiments, the network architecture 200 may be an Ethernet architecture, and both the first device 201 and the second device 202 may be Ethernet devices.

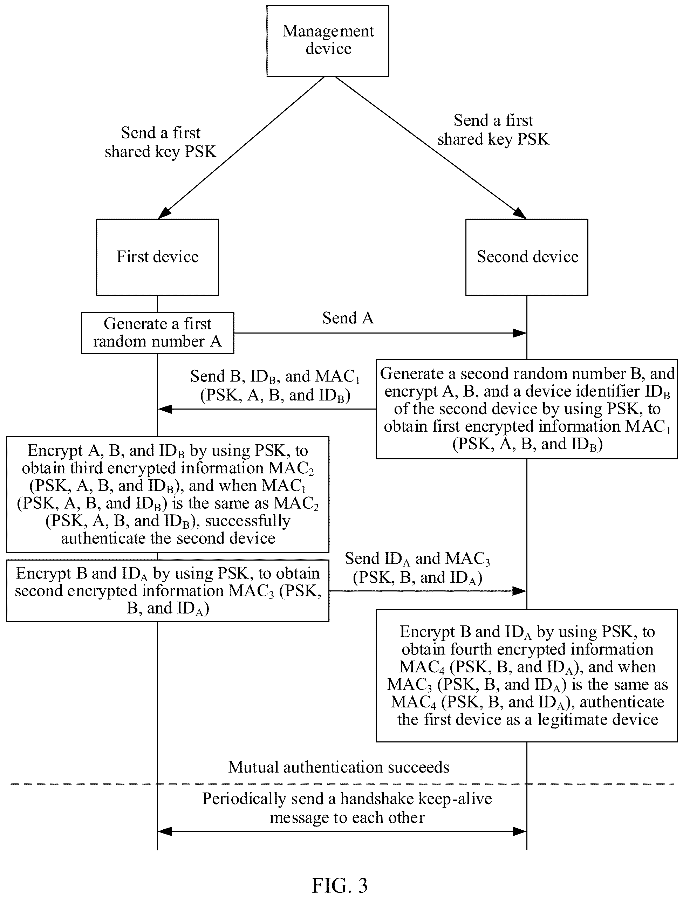

In some embodiments, the security handling may include identity authentication, and the first device 201 may implement identity authentication by performing mutual authentication with the second device 202. Refer to FIG. 3. A process of the mutual authentication may be as follows:

The management device 203 sends a first shared key (represented by PSK) to the first device 201 and the second device 202.

The first device 201 receives the first shared key, generates a first random number (represented by A), and sends the first random number to the second device 202.

The second device 202 receives the first shared key, and generates a second random number (represented by B); encrypts the first random number, the second random number, and a device identifier (represented by ID_{B}) of the second device 202 by using the first shared key, to obtain first encrypted information (represented by MAC₁ (PSK, A, B, and ID_{B}); and sends first authentication information to the first device 201, where the first authentication information includes one or more of the following: the second random number, the device identifier of the second device 202, the first encrypted information, or the like.

The first device 201 receives the first authentication information, and encrypts the first random number, the second random number, and the device identifier of the second device 202 by using the first shared key, to obtain third encrypted information (represented by MAC₂ (PSK, A, B, and ID_{B}); when the first encrypted information is the same as the third encrypted information, authenticates the second device 202 as a legitimate device, that is, successfully authenticates the second device 202; and encrypts the second random number and a device identifier (represented by ID_{A}) of the first device 201 by using the first shared key, to obtain second encrypted information (represented by MAC₃ (PSK, B, and ID_{A}), and sends second authentication information to the second device 202, where the second authentication information includes the device identifier of the first device 201 and the second encrypted information.

The second device 202 receives the second authentication information, and encrypts the second random number and the device identifier of the first device 201 by using the first shared key, to obtain fourth encrypted information (represented by a MAC₄ (PSK, B, and ID_{A}); and when the second encrypted information is the same as the fourth encrypted information, authenticates the first device 201 as a legitimate device, that is, successfully authenticates the first device 201. In this way, the mutual authentication succeeds. After the mutual authentication succeeds, the first device 201 and the second device 202 periodically send a handshake (handshake) keep-alive message to each other, to notify a peer end of an online status.

After the first device 201 and the second device 202 successfully perform mutual authentication, the first device 201 includes a first port, and the second device 202 includes a second port. The first port of the first device 201 is open and communicates with the second device 202, and the second port of the second device 202 is open and communicates with the first device 201.

If the second device 202 communicating with the first port of the first device 201 goes offline abnormally, the first device 201 determines that the second device 202 goes offline abnormally only when the first device 201 does not receive the handshake keep-alive message sent by the second device 202 in a plurality of consecutive periods. A length of the period for sending the handshake keep-alive message is large, for example, the length of the period may be 20 seconds, 25 seconds, or 30 seconds. An accumulated length value of the plurality of periods may reach tens of seconds. In a first time period that lasts for tens of seconds (for example, 90 seconds) after the second device 202 goes offline abnormally, the first device 201 does not determine that the second device 202 goes offline abnormally, and the first port of the first device 201 is still open. In the first time period, an illegitimate device may replace the second device 202 to communicate with the first port of the first device 201. The illegitimate device may receive legitimate data sent by the first device 201, causing data leakage, or send illegitimate data to the first device 201, to attack the first device 201, causing a great security problem.

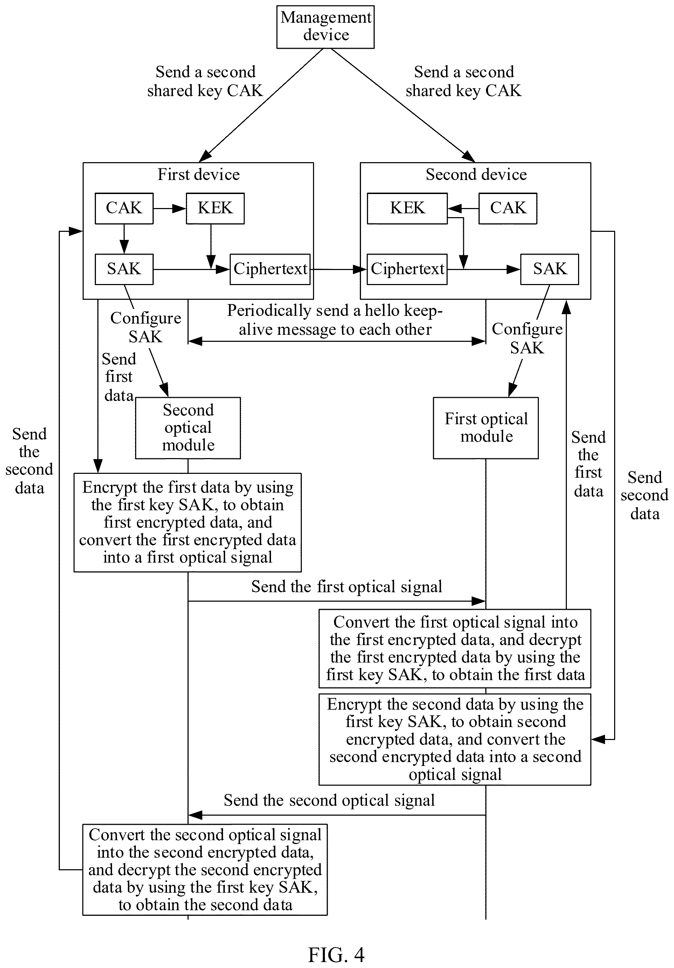

In some embodiments, the security handling may include key agreement. The first device 201 may perform key agreement with the second device 202 to obtain a first key, where the first key is an encryption/decryption key for data transmitted between the first device 201 and the second device 202. Refer to FIG. 4. A process of the key agreement may be as follows:

The management device 203 sends a second shared key (represented by CAK) to the first device 201 and the second device 202.

The first device 201 receives the second shared key, and generates a second-level working key (represented by KEK) based on the second shared key. The second device 202 receives the second shared key, and generates a second-level working key (represented by KEK) based on the second shared key.

A key generation device is selected from the first device 201 and the second device 202.

It is assumed that the selected key generation device is the first device 201. The first device 201 generates a secure random number, generates a first key (represented by SAK) based on the second shared key and the secure random number, encrypts the first key by using the local second-level working key, to obtain ciphertext, and sends the ciphertext to the second device 202. The second device 202 decrypts the ciphertext by using the local second-level working key, to obtain the first key. In this way, both the first device 201 and the second device 202 obtain the first key, to implement key agreement. After the key agreement succeeds, the first device 201 and the second device 202 periodically send a hello (Hello) keep-alive message to each other, to notify a peer end of an online status.

If the second device 202 communicating with the first port of the first device 201 goes offline abnormally, the first device 201 determines that the second device 202 goes offline abnormally only when the first device 201 does not receive the hello keep-alive message sent by the second device 202 in a plurality of consecutive periods. A length of the period for sending the hello keep-alive message is several seconds, for example, the length of the period may be 3 seconds, 4 seconds, or 5 seconds. An accumulated length value of the plurality of periods may reach several seconds. In a second time period that lasts for several seconds (for example, 9 seconds) after the second device 202 goes offline abnormally, the first device 201 does not determine that the second device 202 goes offline abnormally, and the first port of the first device 201 is still open. In the second time period, an illegitimate device may replace the second device 202 to communicate with the first port of the first device 201. If the first device 201 sends the first key in the second time segment, the illegitimate device receives the first key, resulting in key leakage and causing a great security problem.

In some embodiments, with reference to FIG. 2, a link used for communication between the first device 201 and the second device 202 passes through a first optical module 204 and a second optical module 205. The second port of the second device 202 is connected to the first optical module 204, and the first port of the first device 201 is connected to the second optical module 205.

Refer to FIG. 4. When the first optical module 204 and the second optical module 205 are optical modules having an encryption/decryption function, the first device 201 configures the first key for the second optical module 205, and the second device 202 configures the first key for the first optical module 204. When the first device 201 needs to send first data to the second device 202, the first device 201 sends the first data to the second optical module 205. The second optical module 205 encrypts the first data by using the first key, to obtain first encrypted data, converts the first encrypted data into a first optical signal, and sends the first optical signal to the first optical module 204. The first optical module 204 converts the first optical signal into the first encrypted data, decrypts the first encrypted data by using the first key, to obtain the first data, and sends the first data to the second device 202. Similarly, when the second device 202 needs to send second data to the first device 201, the second device 202 sends the second data to the first optical module 204. The first optical module 204 encrypts the second data by using the first key, to obtain second encrypted data, converts the second encrypted data into a second optical signal, and sends the second optical signal to the second optical module 205. The second optical module 205 converts the second optical signal into the second encrypted data, decrypts the second encrypted data by using the first key, to obtain the second data, and sends the second data to the first device 201.

After the first device 201 and the second device 202 successfully perform mutual authentication, if the first optical module 204 connected to the second port of the second device 202 is replaced with an illegitimate optical module, the second device 202 may configure the first key for the illegitimate optical module, resulting in leakage of the first key. In this way, the illegitimate optical module can decrypt transmitted encrypted data, causing a great security problem to the transmitted data.

To resolve the foregoing security problems, the first device 201 and the second device 202 may perform security handling by using any one of the following embodiments.

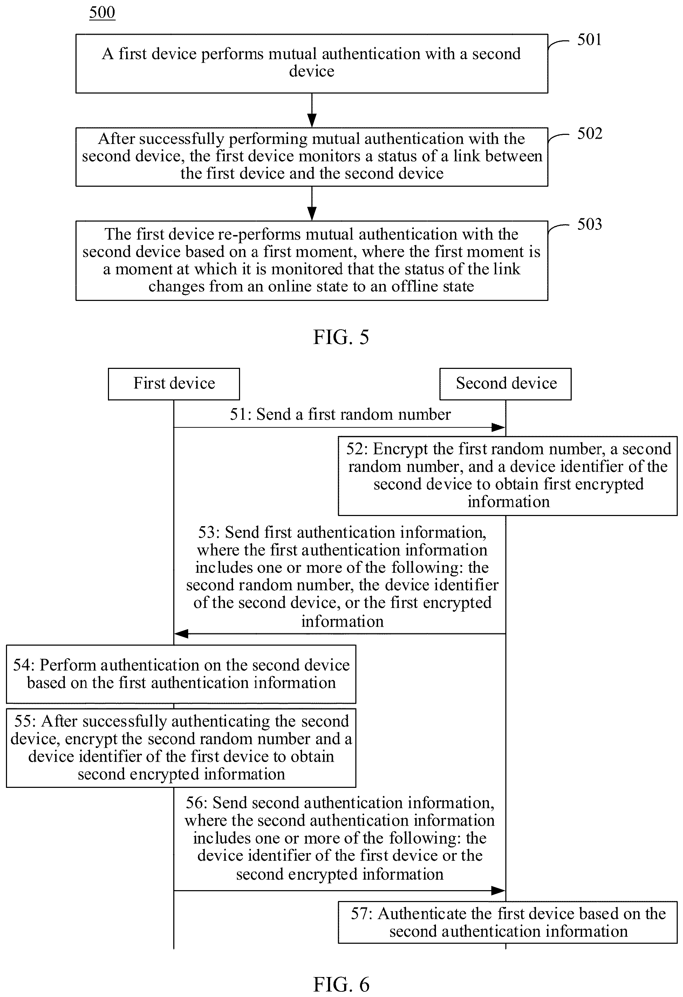

Refer to FIG. 5. An embodiment of this application provides a security handling method 500. The security handling method 500 is applied to the network architecture 200 shown in FIG. 2. The security handling method 500 includes the following mutual authentication procedure.

Step 501: A first device performs mutual authentication with a second device.

The mutual authentication is to perform identity authentication on the first device and the second device. The first device and the second device can communicate with each other only when it is mutually authenticated that the first device and the second device are legitimate devices.

Refer to FIG. 6, in step 501, the first device performs mutual authentication with the second device by using the following steps 51 to 57.

Step 51: The first device sends a first random number to the second device.

The first random number may be randomly generated by the first device, or may be randomly generated by a management device and sent to the first device, or may be a random number stored in the first device.

The first random number is a random number including a plurality of bits. For example, the first random number is a random number including 256 bits, or a random number including 128 bits.

In step 51, the first device sends at least one first multiframe to the second device, where the at least one first multiframe carries the first random number. Optionally, the at least one first multiframe jointly carries the first random number, and each first multiframe carries a part of content of the first random number.

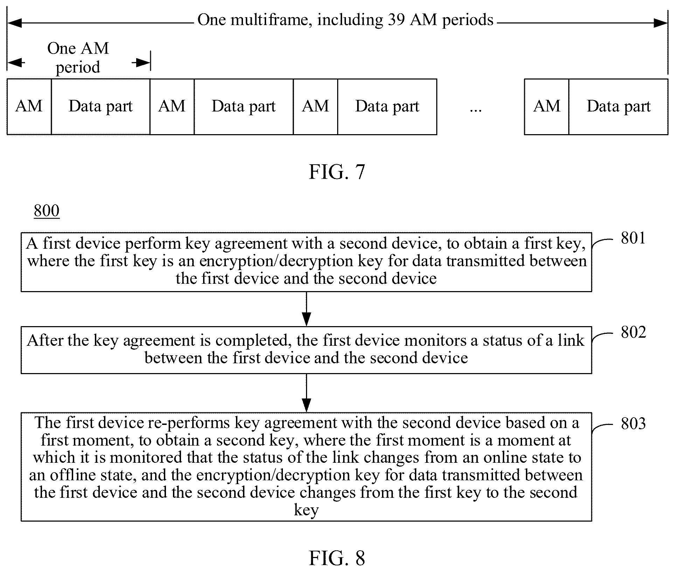

Refer to FIG. 7. The first multiframe includes m alignment marker (alignment marker, AM) periods, where m is an integer greater than 1, and each AM period includes an AM and a data part. Therefore, the first multiframe includes m AMs, and a 1^{st} AM is used as a boundary of the first multiframe and is used to locate a start location of the first multiframe. Each of a 2^{nd} AM to an m^{th} AM includes a plurality of reserved bits, and a part of the plurality of reserved bits are idle. Therefore, the first random number may be carried by using idle reserved bits in a 2^{nd} AM to an m^{th} AM of each first multiframe.

For example, with reference to FIG. 7, assuming that m=39, to be specific, the first multiframe includes 39 Ams, for each AM in a 2^{nd} AM to a 39^{th} AM, the AM includes 12 reserved bits. Therefore, the first multiframe has 468 reserved bits in total, where 468=39*12, and * is a multiplication operation. 304 reserved bits in the 468 reserved bits are used to transmit security information. Therefore, the first multiframe includes 164 idle reserved bits, which may be used to transmit the first random number.

Assuming that a length of the first random number is 256 bits, and there are 32 bytes in total, the first device uses two first multiframes to jointly carry the first random number, idle reserved bits in a 2^{nd} AM to a 39^{th} AM of a 1^{st} first multiframe carry content of first 17 bytes of the first random number in total, and idle reserved bits in a 2^{nd} AM to a 39^{th} AM of a 2^{nd} first multiframe carry content of last 15 bytes of the first random number in total.

Step 52: The second device receives the first random number, and encrypts the first random number, a second random number, and a device identifier of the second device to obtain first encrypted information.

The second random number may be randomly generated by the second device, or may be randomly generated by the management device and sent to the second device, or may be a random number stored in the second device.

The second random number is also a random number including a plurality of bits. For example, the second random number is a random number including 256 bits, or a random number including 128 bits.

In step 52, the second device encrypts the first random number, the second random number, and the device identifier of the second device by using a first shared key, to obtain the first encrypted information. The first shared key is sent by the management device.

In some embodiments, the second device may read a module identifier of a first optical module from the first optical module, and encrypt the first random number, the second random number, the device identifier of the second device, and the module identifier of the first optical module to obtain the first encrypted information.

The module identifier of the first optical module may include at least one type identifier. For example, with reference to Table 1, the at least one type identifier in the module identifier of the first optical module includes one or more of the following type identifiers: a vendor organizationally unique identifier (vendor organizationally unique identifier, Vendor OUI), a vendor part number (vendor part number, Vendor PN), a vendor serial number (vendor serial number, Vendor SN), Year, Month, or Day. Year, Month, and Day respectively indicate year, month, and day of a production date of the first optical module.

At least one type identifier may be selected from a plurality of type identifiers shown in Table 1 as the module identifier of the first optical module, provided that a principle of selecting the type identifier can represent uniqueness of the module identifier of the first optical module. For example, six type identifiers in Table 1 may be selected as the module identifier of the first optical module, and a length of the module identifier of the first optical module is 304 bits.

**Table 1**

| Length | Name of a type identifier | Description |
|---|---|---|
| 24 | Vendor OUI | Vendor organizationally unique identifier |
| 128 | Vendor PN | Vendor part number |
| 128 | Vendor SN | Vendor serial number |
| 8 | Year | Optical module production date-Year |
| 8 | Month | Optical module production date-Month |
| 8 | Day | Optical module production date-Day |

Step 53: The second device sends first authentication information to the first device, where the first authentication information includes one or more of the following: the second random number, the device identifier of the second device, or the first encrypted information.

In step 53, the second device sends at least one second multiframe to the first device, where the at least one second multiframe carries the first authentication information. Optionally, the at least one second multiframe jointly carries the first authentication information, and each second multiframe carries a part of content of the first authentication information.

For example, assuming that the second random number includes 32 bytes, the device identifier of the second device includes 38 bytes, the first encrypted information includes 140 bytes, a structure of the second multiframe is the same as a structure of the first multiframe shown in FIG. 7, and each second multiframe includes 164 idle reserved bits, the second device uses 13 second multiframes to carry the first authentication information.

Step 54: The first device receives the first authentication information, and authenticates the second device based on the first authentication information.

In some embodiments, the first device encrypts the first random number, the second random number, and the device identifier of the second device by using the first shared key, to obtain third encrypted information; and when the first encrypted information is the same as the third encrypted information, authenticates the second device as a legitimate device, that is, successfully authenticates the second device.

In some embodiments, the first device decrypts the first encrypted information by using the first shared key, to obtain the module identifier of the first optical module, and determines, based on the module identifier of the first optical module, whether the first optical module is legitimate; when determining that the first optical module is legitimate, encrypts the first random number, the second random number, the device identifier of the second device, and the module identifier of the first optical module to obtain third encrypted information; and when the first encrypted information is the same as the third encrypted information, authenticates the second device as a legitimate device, that is, successfully authenticates the second device.

Optionally, the module identifier of the first optical module may include manufacturer information of the first optical module, and a background of a manufacturer of the first optical module includes a module identifier of a legitimate optical module. The first device queries, based on the manufacturer information, whether the background corresponding to the manufacturer includes the module identifier of the first optical module. If it is found that the background corresponding to the manufacturer includes the module identifier of the first optical module, it is determined that the first optical module is legitimate; or if it is found that the background corresponding to the manufacturer does not include the module identifier of the first optical module, it is determined that the first optical module is illegitimate.

Because the first encrypted information is obtained by encrypting the module identifier of the first optical module, when the first optical module is replaced with an illegitimate optical module, the first device determines the illegitimate optical module, and therefore unsuccessfully authenticates the second device. In this way, the first device may not communicate with the second device, to avoid configuring a key for the first optical module and prevent the first optical module from decrypting, by using the key, encrypted data sent by the first device, to improve data security.

Step 55: After the first device successfully authenticates the second device, the first device encrypts the second random number and a device identifier of the first device to obtain second encrypted information.

In step 55, the second device encrypts the second random number and the device identifier of the first device by using the first shared key, to obtain the second encrypted information. The first shared key is sent by the management device.

In some embodiments, the first device may read a module identifier of a second optical module from the second optical module, and encrypt the second random number, the device identifier of the first device, and the module identifier of the second optical module to obtain the second encrypted information.

Step 56: The first device sends second authentication information to the second device, where the second authentication information includes one or more of the following: the device identifier of the first device or the second encrypted information.

In step 56, the first device sends at least one third multiframe to the second device, where the at least one third multiframe carries the second authentication information. Optionally, the at least one third multiframe jointly carries the second authentication information, and each third multiframe carries a part of content of the second authentication information.

For example, assuming that the device identifier of the first device includes 38 bytes, the second encrypted information includes 108 bytes, a structure of the third multiframe is the same as the structure of the first multiframe shown in FIG. 7, and each third multiframe includes 164 idle reserved bits, the first device uses nine third multiframes to carry the second authentication information.

Step 57: The second device receives the second authentication information, and authenticates the first device based on the second authentication information.

In some embodiments, the first device encrypts the second random number and the device identifier of the first device by using the first shared key, to obtain fourth encrypted information; and when the second encrypted information is the same as the fourth encrypted information, authenticates the first device as a legitimate device, that is, successfully authenticates the first device.

In some embodiments, the first device decrypts the second encrypted information by using the first shared key, to obtain the module identifier of the second optical module, and determines, based on the module identifier of the second optical module, whether the second optical module is legitimate; when determining that the second optical module is legitimate, encrypts the second random number, the device identifier of the first device, and the module identifier of the second optical module to obtain fourth encrypted information; and when the first encrypted information is the same as the fourth encrypted information, authenticates the first device as a legitimate device, that is, successfully authenticates the first device.

Because the second encrypted information is obtained by encrypting the module identifier of the second optical module, when the second optical module is replaced with an illegitimate optical module, the second device determines the illegitimate optical module, and therefore unsuccessfully authenticates the first device. In this way, the second device may not communicate with the first device, to avoid configuring a key for the second optical module and prevent the second optical module from decrypting, by using the key, encrypted data sent by the second device, to improve data security.

Step 502: After successfully performing mutual authentication with the second device, the first device monitors a status of a link between the first device and the second device.

In some embodiments, after the first device successfully performs mutual authentication with the second device, the first device may send data to the second device, and/or the second device may send data to the first device.

In some embodiments, after the first device successfully performs mutual authentication with the second device, the first device performs key agreement with the second device. For a detailed agreement process, refer to a subsequent embodiment shown in FIG. 8. Details are not described herein again.

The link is established between the first device and the second device, the status of the link is an online state, and data is transmitted between the first device and the second device by using the link. When the second device goes offline abnormally or the first optical module connected to the second device is replaced with an illegitimate optical module, the status of the link automatically changes from the online state to an offline state, and the first device may immediately monitor that the status of the link changes from the online state to the offline state.

Because the first device monitors the status of the link, it may be determined, based on the status of the link, whether the second device goes offline, so that the first device and the second device do not need to periodically send a handshake keep-alive message to each other, and bandwidth resources can be saved.

Step 503: The first device re-performs mutual authentication with the second device based on a first moment, where the first moment is a moment of monitoring that the status of the link changes from the online state to the offline state.

In step 503, the following two modes: a high-security mode and a high-usability mode, may be used to re-perform mutual authentication with the second device.

For the high-security mode, the first device re-performs mutual authentication with the second device at the first moment, that is, when monitoring that the status of the link changes from the online state to the offline state, the first device re-performs mutual authentication with the second device. For a process of the mutual authentication, refer to the process in step 501. Details are not described herein again.

For the high-usability mode, the first device monitors the status of the link at a second moment; and if the status of the link has changed to the online state, re-performs mutual authentication with the second device, where the second moment is later than the first moment, and a time difference between the first moment and the second moment is a specified difference; or if the status of the link is still the offline state, re-performs mutual authentication with the second device when monitoring, after the second moment, that the status of the link changes to the online state. For a process of the mutual authentication, refer to the process in step 501. Details are not described herein again.

The second device may frequently go online or offline due to unstable line connection, causing frequent switching performed between the online state and the offline state of the link. The high-usability mode may be applied to a case in which the second device frequently goes online or offline, causing frequent switching performed between the online state and the offline state of the link. In this case, frequently re-performing mutual authentication with the second device can be avoided, to save computing resources, bandwidth resources, and the like.

The following lists an example of implementing the high-usability mode. In the example, the first device starts a timer at the first moment to start timing, and in this case, a service transmitted between the first device and the second device is not blocked. When a time length of the timing reaches the specified difference, the first device monitors the status of the link at the second moment; and if the status of the link has changed to the online state, blocks the service transmitted between the first device and the second device, and re-performs mutual authentication with the second device; or if the status of the link is still the offline state, restarts the timer to start timing, and continuously monitors the status of the link; and when monitoring that the status of the link changes to the online state, re-performs mutual authentication with the second device. In this case, the service transmitted between the first device and the second device is still not blocked.

When the second device goes offline abnormally and an illegitimate device communicates with a first port of the first device, or when the first optical module connected to the second device is replaced with an illegitimate optical module, the status of the link automatically changes from the online state to the offline state, and the first device immediately monitors that the status of the link changes from the online state to the offline state. In this way, the first device can detect these abnormalities in time, so that the first device can re-perform mutual authentication in time without waiting for a period of time. After re-performing the mutual authentication, the first device unsuccessfully authenticates a peer device, and stops communication through the first port.

In this embodiment of this application, the first device performs mutual authentication with the second device. After it is mutually authenticated that the first device and the second device are mutually legitimate devices, the first device monitors the status of the link between the first device and the second device. The first device can detect, in time by using the status of the link, whether the second device goes offline abnormally or whether the first optical module connected to the second device is replaced with an illegitimate optical module. In this way, the first device can re-perform mutual authentication with the second device without waiting for dozens of seconds. Therefore, it may be authenticated that the peer device communicating with the first device is an illegitimate device or the optical module is an illegitimate optical module, and the first device stops receiving and sending data through the first port, to improve security.

Refer to FIG. 8. An embodiment of this application provides a security handling method 800. The security handling method 800 is applied to the network architecture 200 shown in FIG. 2, and the security handling method 800 includes the following key agreement procedure.

Step 801: A first device performs key agreement with a second device, to obtain a first key, where the first key is an encryption/decryption key for data transmitted between the first device and the second device.

In step 801, a key generation device is selected from the first device and the second device. It is assumed that the key generation device is the first device. The first device generates a first key and sends the first key to the second device.

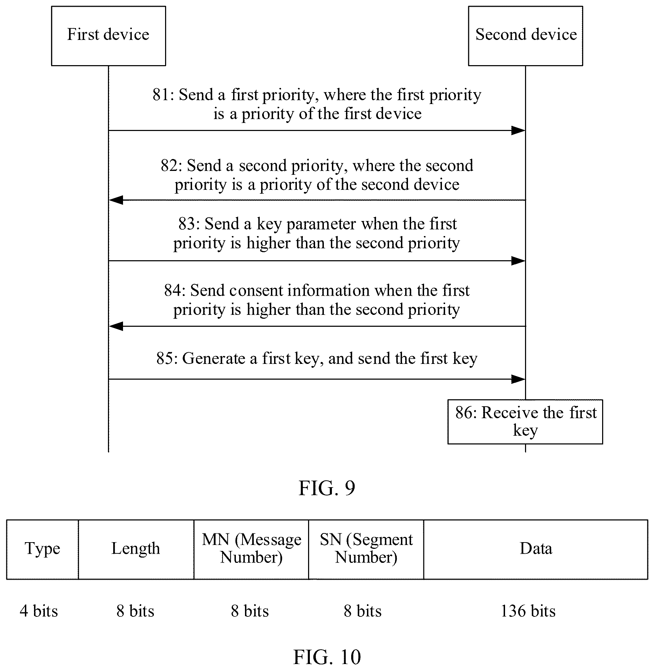

Refer to FIG. 9. The first device performs key agreement with the second device by using the following steps 81 to 86.

Step 81: The first device sends a first priority to the second device, where the first priority is a priority of the first device.

In some embodiments, the first priority may be allocated by a management device to the first device, or the first priority may be device information of the first device. For example, the first priority may be a medium access control (medium access control, MAC) address, an Internet protocol (internet protocol, IP) address, a serial number, or the like of the first device.

In step 81, the first device sends at least one fourth multiframe to the second device, where the at least one fourth multiframe carries the first priority.

For each of the at least one fourth multiframe, each fourth multiframe includes n AM periods, n is an integer greater than 1, and each AM period includes an AM and a data part. Therefore, each fourth multiframe includes n AMs. An idle reserved bit included in a 2^{nd} AM to an n^{th} AM in each fourth multiframe carries the first priority.

Step 82: The second device receives the first priority, and sends a second priority to the first device, where the second priority is a priority of the second device.

In some embodiments, the second priority may be allocated by the management device to the second device, or the second priority may be device information of the second device. For example, the second priority may be a MAC address, an IP address, a serial number, or the like of the second device.

In step 82, the second device sends at least one fifth multiframe to the first device, where the at least one fifth multiframe carries the second priority.

It is assumed that in this embodiment of this application, the first priority is higher than the second priority.

Step 83: The first device receives the first priority, and sends a key parameter to the second device when the first priority is higher than the second priority.

When the first device determines that the first priority is higher than the second priority, the first device is selected as a key generation device to generate a key, then configures the key parameter, and sends the key parameter to the second device.

In some embodiments, the key parameter includes one or more of the following: an encryption algorithm or a key length.

In step 83, the first device sends at least one sixth multiframe to the second device, where the at least one sixth multiframe carries the key parameter.

Step 84: The second device receives the key parameter, and sends consent information to the first device when the first priority is higher than the second priority, where the consent information indicates that the first device is consented to generate the key and the key parameter sent by the first device.

When determining that the first priority is higher than the second priority, the second device also selects the first device as the key generation device, agrees that the first device generates the key, and agrees with the key parameter sent by the first device, and therefore sends the consent information to the first device.

In step 84, the first device sends at least one seventh multiframe to the second device, where the at least one seventh multiframe carries the consent information.

Step 85: The first device receives the consent information, generates the first key, and sends the first key to the second device.

In step 85, the first device generates a secure random number, generates the first key based on a second shared key and the secure random number, encrypts the first key by using a local second-level working key, to obtain ciphertext, and sends the ciphertext to the second device.

In some embodiments, the first device encrypts the secure random number by using the second shared key, to obtain the first key.

In step 85, the first device sends at least one eighth multiframe to the second device, where the at least one eighth multiframe carries the first key.

Step 86: The second device receives the first key.

In step 86, the second device receives the ciphertext, and decrypts the ciphertext by using the local second-level working key, to obtain the first key.

The first multiframe, the second multiframe, the third multiframe, the fourth multiframe, the fifth multiframe, the sixth multiframe, the seventh multiframe, and the eighth multiframe may all be multiframes of a same structure, for example, may all be of the multiframe structure shown in FIG. 7. The eight multiframes are all of the multiframe structure shown in FIG. 7, and 164 idle reserved bits in the multiframe shown in FIG. 7 may form a security information frame.

Refer to FIG. 10. The security information frame includes a type (Type), a length (Length), an message number (Message Number, MN), a segment number (Segment Number, SN), and a data part (Data). Refer to Table 2 for meanings of a plurality of fields in the security information frame.

**Table 2**

| Field | Length (bit) | Description |
|---|---|---|
| Type | 4 | An information type carried in the security information frame may be carried. For example, the information type may indicate various types of information (for example, a first random number, first authentication information, or second authentication information) transmitted in a process of mutual authentication, or may indicate various types of information (for example, a first priority, a first priority, a key parameter, or consent information) transmitted in a process of key agreement. |
| Length | 8 | Length from an MN field to a valid data field. Length may be expressed in bytes, and a value ranges from 2 to 19. If the data field does not include valid information, length=2. |
| MN | 8 | Message number, which identifies a sequence of information transmitted in an authentication protocol. When MN=1, it indicates authentication/key agreement. |
| SN | 8 | Segment number, which identifies different segments of same MN information. Long single authentication/key agreement information may not be carried by one security information frame, and needs to be segmented and carried by a plurality of security information frames. If one piece of authentication information of MN=10 has a length of 26 bytes, two security information frames (MN=10, SN=1) and (MN=10, SN=2) are required to carry the authentication information. |
| Data | 136 | Content carried in the security information frame. |

Step 802: After the key agreement is completed, the first device monitors a status of a link between the first device and the second device.

The link is established between the first device and the second device, the status of the link is an online state, and data is transmitted between the first device and the second device by using the link. When the second device goes offline abnormally or a first optical module connected to the second device is replaced with an illegitimate optical module, the status of the link automatically changes from the online state to an offline state, and the first device may immediately monitor that the status of the link changes from the online state to the offline state.

Because the first device monitors the status of the link, it may be determined, by using the status of the link, whether the second device goes offline abnormally or whether the first optical module connected to the second device is replaced with an illegitimate optical module, so that the first device and the second device do not need to periodically send a hello keep-alive message to each other, and bandwidth resources can be saved.

In some embodiments, after the key agreement is completed, when the first device needs to send first data to the second device, the first device encrypts the first data by using the first key, to obtain the first encrypted data, and sends the first encrypted data to the second device. The second device receives the first encrypted data, and decrypts the first encrypted information by using the first key, to obtain the first data. Alternatively, when the second device needs to send second data to the first device, the second device encrypts the second data by using the first key, to obtain second encrypted data, and sends the second encrypted data to the first device. The first device receives the second encrypted data, and decrypts the second encrypted information by using the first key, to obtain the second data.

In some embodiments, after the key agreement is completed, when the first optical module and a second optical module are optical modules having an encryption/decryption function, the first device configures the first key for the second optical module, and the second device configures the first key for the first optical module. When the first device needs to send the first data to the second device, the first device sends the first data to the second optical module. The second optical module encrypts the first data by using the first key, to obtain the first encrypted data, converts the first encrypted data into a first optical signal, and sends the first optical signal to the first optical module. The first optical module converts the first optical signal into the first encrypted data, decrypts the first encrypted data by using the first key, to obtain the first data, and sends the first data to the second device. Similarly, when the second device needs to send the second data to the first device, the second device sends the second data to the first optical module. The first optical module encrypts the second data by using the first key, to obtain the second encrypted data, converts the second encrypted data into a second optical signal, and sends the second optical signal to the second optical module. The second optical module converts the second optical signal into the second encrypted data, decrypts the second encrypted data by using the first key, to obtain the second data, and sends the second data to the first device.

Step 803: The first device re-performs key agreement with the second device based on a first moment, to obtain a second key, where the first moment is a moment of monitoring that the status of the link changes from the online state to the offline state, and the encryption/decryption key for data transmitted between the first device and the second device changes from the first key to the second key.

In step 803, the following two modes: a high-security mode and a high-usability mode, may be used to re-perform key agreement with the second device.

For the high-security mode, the first device re-performs key agreement with the second device at the first moment, that is, when monitoring that the status of the link changes from the online state to the offline state, the first device re-performs key agreement with the second device. For a process of the key agreement, refer to the process in step 801. Details are not described herein again.

For the high-usability mode, the first device monitors the status of the link at a second moment; and if the status of the link has changed to the online state, re-performs key agreement with the second device, where the second moment is later than the first moment, and a time difference between the first moment and the second moment is a specified difference; or if the status of the link is still the offline state, re-performs key agreement with the second device when monitoring, after the second moment, that the status of the link changes to the online state. For a process of the key agreement, refer to the process in step 801. Details are not described herein again.

The following lists an example of implementing the high-usability mode. In the example, the first device starts a timer at the first moment to start timing, and in this case, a service transmitted between the first device and the second device is not blocked. When a time length of the timing reaches the specified difference, the first device monitors the status of the link at the second moment; and if the status of the link has changed to the online state, blocks the service transmitted between the first device and the second device, and re-performs key agreement with the second device; or if the status of the link is still the offline state, restarts the timer to start timing, and continuously monitors the status of the link; and when monitoring that the status of the link changes to the online state, re-performs key agreement with the second device. In this case, the service transmitted between the first device and the second device is still not blocked.

When the second device goes offline abnormally and an illegitimate device communicates with a first port of the first device, or when the first optical module connected to the second device is replaced with an illegitimate optical module, the status of the link automatically changes from the online state to the offline state, and the first device immediately monitors that the status of the link changes from the online state to the offline state. In this way, the first device can detect these abnormalities in time. However, in these abnormalities, the first key may have been leaked, and the first key is still used for communication, causing a great security problem. Because the first device can detect these abnormalities in time, the first device can re-perform key agreement in time without waiting for a period of time, to improve security.

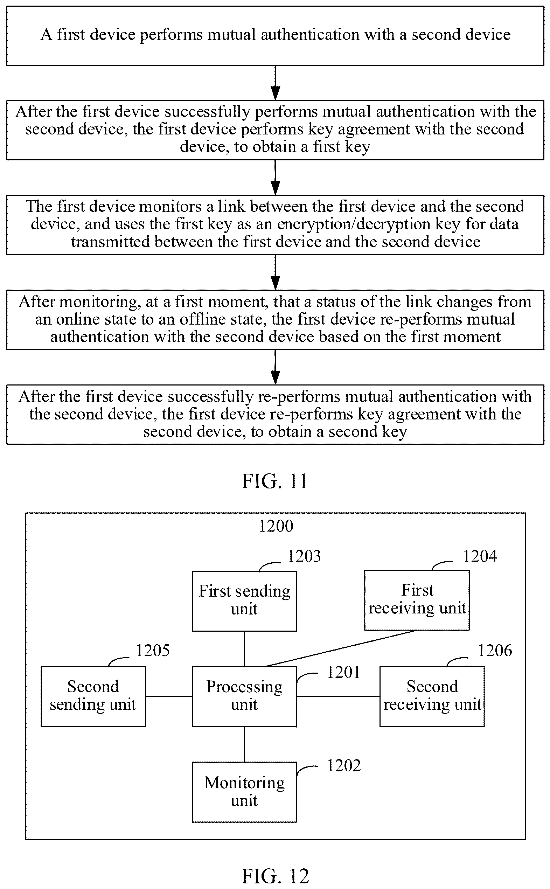

In some embodiments, with reference to FIG. 11, the first device may first perform mutual authentication with the second device; and after the first device successfully performs mutual authentication with the second device, the first device performs key agreement with the second device, to obtain the first key. Then, the first device monitors the link between the first device and the second device, and uses the first key as an encryption/decryption key for data transmitted between the first device and the second device. After monitoring that the status of the link changes from the online state to the offline state at the first moment, the first device re-performs mutual authentication with the second device based on the first moment. After the first device successfully re-performs mutual authentication with the second device, the first device re-performs key agreement with the second device to obtain the second key, and the encryption/decryption key for the data transmitted between the first device and the second device changes from the first key to the second key.

In this embodiment of this application, the first device performs key agreement with the second device; and after the key agreement between the first device and the second device is completed, the first device monitors the status of the link between the first device and the second device. The first device can detect, in time based on the status of the link, whether the second device goes offline abnormally or whether the first optical module connected to the second device is replaced with an illegitimate optical module. In this way, the key agreement can be re-performed without waiting for several seconds, and this can avoid using the leaked first key for communication, and improves security.

Refer to FIG. 12. An embodiment of this application provides a security handling apparatus 1200. The apparatus 1200 is deployed on a first device in the network architecture 200 shown in FIG. 2, deployed on a first device in the method 500 shown in FIG. 5, or deployed on a first device in the method 800 shown in FIG. 8, and includes:
a processing unit 1201, configured to perform a security handling operation with a second device, where the security handling operation includes one or more of the following operations: mutual authentication or key agreement; and
a monitoring unit 1202, configured to: after the security handling operation is successfully performed, monitor a status of a link between the apparatus 1200 and a second device.

The processing unit 1201 is further configured to re-perform the security handling operation with the second device based on a first moment, where the first moment is a moment at which it is monitored that the status of the link changes from an online state to an offline state.

Optionally, for a detailed implementation process in which the processing unit 1201 performs the security handling operation, refer to related content in step 501 of the method 500 shown in FIG. 5 or step 801 of the method 800 shown in FIG. 8. Details are not described herein again.

Optionally, for a detailed implementation process in which the monitoring unit 1202 monitors the status of the link, refer to related content in step 502 of the method 500 shown in FIG. 5 or step 802 of the method 800 shown in FIG. 8. Details are not described herein again.

Optionally, for a detailed implementation process in which the processing unit 1201 re-performs the security handling operation with the second device based on the first moment, refer to related content in step 503 of the method 500 shown in FIG. 5 or step 803 of the method 800 shown in FIG. 8. Details are not described herein again.

Optionally, the security handling operation includes mutual authentication, and the processing unit 1201 is configured to:
re-perform mutual authentication with the second device at the first moment;
if the status of the link has changed to the online state at a second moment, re-perform mutual authentication with the second device, where the second moment is later than the first moment, and a time difference between the first moment and the second moment is a specified difference; or
if the status of the link is still the offline state at the second moment, re-perform mutual authentication with the second device when monitoring, after the second moment, that the status of the link changes to the online state.

Optionally, the apparatus 1200 includes a first sending unit 1203 and a first receiving unit 1204.

The first sending unit 1203 is configured to send a first random number to the second device.

The first receiving unit 1204 is configured to receive first authentication information sent by the second device, where the first authentication information includes one or more of the following: a second random number of the second device, a device identifier of the second device, or first encrypted information, and the first encrypted information is obtained by encrypting the first random number, the second random number, and the device identifier of the second device.

The first sending unit 1203 is configured to: after the processing unit 1201 successfully authenticates the second device based on the first authentication information, send second authentication information to the second device, where the second authentication information includes one or more of the following: a device identifier of the apparatus 1200 or second encrypted information, the second encrypted information is obtained by encrypting the second random number and the device identifier of the apparatus 1200, and the second device is configured to authenticate the apparatus 1200 based on the second authentication information.

Optionally, for a detailed implementation process in which the first sending unit 1203 sends the first random number, refer to related content in step 51 of the method shown in FIG. 6. Details are not described herein again.

Optionally, for a detailed implementation process in which the first receiving unit 1204 receives the first authentication information, refer to related content in step 54 of the method shown in FIG. 6. Details are not described herein again.

Optionally, for a detailed implementation process in which the first sending unit 1203 sends the second authentication information, refer to related content in step 56 of the method shown in FIG. 6. Details are not described herein again.

Optionally, the first encrypted information is obtained by encrypting a module identifier of a first optical module, the first random number, the second random number, and the device identifier of the second device, the first optical module is an optical module that is located on the link and connected to the second device, and the processing unit 1201 is configured to:
decrypt the first encrypted information to obtain the module identifier of the first optical module;
when determining, based on the module identifier of the first optical module, that the first optical module is legitimate, encrypt the first random number, the second random number, the device identifier of the second device, and the module identifier of the first optical module to obtain third encrypted information; and
when the first encrypted information is the same as the third encrypted information, successfully authenticate the second device.

Optionally, for a detailed implementation process in which the processing unit 1201 decrypts the first encrypted information, refer to related content in step 54 of the method shown in FIG. 6. Details are not described herein again.

Optionally, for a detailed implementation process in which the processing unit 1201 obtains the third encrypted information, refer to related content in step 54 of the method shown in FIG. 6. Details are not described herein again.

Optionally, for a detailed implementation process in which when the first encrypted information is the same as the third encrypted information, the processing unit 1201 successfully authenticates the second device, refer to related content in step 54 in the method shown in FIG. 6. Details are not described herein again.

Optionally, the second encrypted information is obtained by encrypting a module identifier of a second optical module, the second random number, and the device identifier of the apparatus 1200, and the second optical module is an optical module that is located on the link and connected to the apparatus 1200.

Optionally, the first receiving unit 1204 is configured to receive at least one multiframe sent by the second device, where the at least one multiframe carries the first authentication information.

Optionally, for a detailed implementation process in which the first receiving unit 1204 receives the at least one multiframe, refer to related content in step 54 of the method shown in FIG. 6. Details are not described herein again.

Optionally, each of the at least one multiframe includes m alignment markers AMs, m is an integer greater than 1, and a bit that carries the first authentication information is an idle reserved bit included in a 2^{nd} AM to an m^{th} AM in each multiframe.

Optionally, the security handling operation includes key agreement, a result obtained by performing key agreement between the processing unit 1201 and the second device includes a first key, and the first key is an encryption/decryption key for data transmitted between the apparatus 1200 and the second device.

A result obtained by re-performing key agreement between the processing unit 1201 and the second device includes a second key, and the encryption/decryption key for data transmitted between the apparatus 1200 and the second device changes from the first key to the second key.

Optionally, the processing unit 1201 is configured to:
re-perform key agreement with the second device at the first moment;
if it is monitored, at the second moment, that the status of the link has changed to the online state, re-perform key agreement with the second device, where the second moment is later than the first moment, and the time difference between the first moment and the second moment is the specified difference; or
if it is monitored, at the second moment, that the status of the link is still the offline state, re-perform key agreement with the second device when it is monitored, after the second moment, that the status of the link changes to the online state.

Optionally, the apparatus 1200 further includes a second sending unit 1205 and a second receiving unit 1206.

The second sending unit 1205 is configured to send a first priority to the second device, where the first priority is a priority of the apparatus 1200.

The second receiving unit 1206 is configured to receive a second priority sent by the second device, where the second priority is a priority of the second device.

The processing unit 1201 is configured to generate the first key when the first priority is higher than the second priority.

The second sending unit 1205 is further configured to send the first key to the second device.

Optionally, for a detailed implementation process in which the second sending unit 1205 sends the first priority, refer to related content in step 81 of the method shown in FIG. 9. Details are not described herein again.

Optionally, for a detailed implementation process in which the second receiving unit 1206 receives the second priority sent by the second device, refer to related content in step 83 of the method shown in FIG. 9. Details are not described herein again.

Optionally, for a detailed implementation process in which the processing unit 1201 generates the first key, refer to related content in step 85 of the method shown in FIG. 9. Details are not described herein again.

Optionally, for a detailed implementation process in which the second sending unit 1205 sends the first key, refer to related content in step 85 of the method shown in FIG. 9. Details are not described herein again.

Optionally, the second sending unit 1205 is configured to send at least one multiframe to the second device, where the at least one multiframe carries the first priority.

Optionally, for a detailed implementation process in which the second sending unit 1205 sends the at least one multiframe, refer to related content in step 81 of the method shown in FIG. 9. Details are not described herein again.

Optionally, each of the at least one second multiframe includes n AMs, where n is an integer greater than 1, and a bit that carries the first priority is an idle reserved bit included in a 2^{nd} AM to an n^{th} AM in each second multiframe.

In this embodiment of this application, the processing unit performs mutual authentication or key agreement with the second device. The monitoring unit monitors the status of the link between the apparatus and the second device. The processing unit re-performs mutual authentication or key agreement with the second device based on the first moment. When the second device is replaced with an illegitimate device or the optical module connected to the second device is replaced with an illegitimate optical module, the status of the link between the apparatus and the second device changes from the online state to the offline state, and the monitoring unit can monitor the change of the status of the link in time at the first moment, so that the processing unit can re-perform mutual authentication with the second device in time. In this way, the illegitimate device or the illegitimate optical module has no time to communicate with the apparatus, or after the processing unit agrees on the second key with the second device, communication is performed by using the second key, to improve communication security.

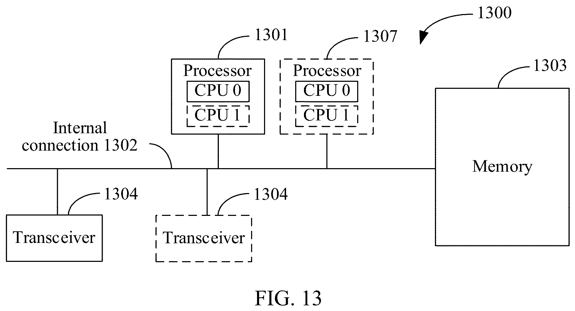

FIG. 13 is a diagram of a device 1300 according to an embodiment of this application. The device 1300 may be a first device in the network architecture 200 shown in FIG. 2, or the device 1300 may be a first device in the method 500 shown in FIG. 5, or the device 1300 may be a first device in the method 800 shown in FIG. 8. The device 1300 includes at least one processor 1301, an internal connection 1302, a memory 1303, and at least one transceiver 1304.

The device 1300 is an apparatus of a hardware structure, and may be configured to implement functional modules in the apparatus 1200 shown in FIG. 12. For example, a person skilled in the art may figure out that the processing unit 1201 and the monitoring unit 1202 in the apparatus 1200 shown in FIG. 12 may be implemented by the at least one processor 1301 by invoking code in the memory 1303, and the first sending unit 1203, the first receiving unit 1204, the second sending unit 1205, and the second receiving unit 1206 in the apparatus 1200 shown in FIG. 12 may be implemented by the at least one transceiver 1304.

The device 1300 may be further configured to implement a function of the first device in any one of the foregoing embodiments.

The processor 1301 may be a general-purpose central processing unit (central processing unit, CPU), a network processor (network processor, NP), a microprocessor, an application-specific integrated circuit (application-specific integrated circuit, ASIC), or one or more integrated circuits for controlling program execution of the solutions of this application.

The internal connection 1302 may include a path for transmitting information between the foregoing components. The internal connection 1302 may be a board, a bus, or the like.

The at least one transceiver 1304 is configured to communicate with another device or a communication network.

The memory 1303 may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium capable of carrying or storing expected program code in a form of instructions or data structures and capable of being accessed by a computer, but is not limited thereto. The memory may exist independently, and is connected to the processor through the bus. Alternatively, the memory may be integrated with the processor.

The memory 1303 is configured to store application program code for executing the solutions in this application, and the processor 1301 controls the execution. The processor 1301 is configured to execute the application program code stored in the memory 1303, and cooperate with the at least one transceiver 1304, so that the device 1300 implements a function in the method in this patent.

During specific implementation, in an embodiment, the processor 1301 may include one or more CPUs, such as a CPU 0 and a CPU 1 in FIG. 13.

During specific implementation, in an embodiment, the device 1300 may include a plurality of processors, for example, the processor 1301 and a processor 1307 in FIG. 13. Each of the processors may be a single-core (single-CPU) processor, or may be a multi-core (multi-CPU) processor. The processor herein may be one or more devices, circuits, and/or processing cores configured to process data (for example, computer program instructions).

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but are not intended to limit this application. Any modification, equivalent replacement, improvement, or the like made within the principle of this application should fall within the protection scope of this application.

## Claims

1. A security handling method, wherein the method comprises:
performing, by a first device, a security handling operation with a second device, wherein the security handling operation comprises one or more of the following operations: mutual authentication or key agreement;
after successfully performing the security handling operation, monitoring, by the first device, a status of a link between the first device and the second device; and
re-performing, by the first device, the security handling operation with the second device based on a first moment, wherein the first moment is a moment at which it is monitored that the status of the link changes from an online state to an offline state.

2. The method according to claim 1, wherein the security handling operation comprises mutual authentication, and the re-performing, by the first device, the security handling operation with the second device based on the first moment comprises:
performing, by the first device, mutual authentication with the second device again at the first moment;
if the status of the link has changed to the online state at a second moment, re-performing, by the first device, mutual authentication with the second device, wherein the second moment is later than the first moment, and a time difference between the first moment and the second moment is a specified difference; or
if the status of the link is still the offline state at the second moment, re-performing, by the first device, mutual authentication with the second device when monitoring, after the second moment, that the status of the link changes to the online state.

3. The method according to claim 2, wherein the performing, by the first device, the security handling operation with the second device comprises:
sending, by the first device, a first random number to the second device;
receiving, by the first device, first authentication information sent by the second device, wherein the first authentication information comprises one or more of the following: a second random number of the second device, a device identifier of the second device, or first encrypted information, and the first encrypted information is obtained by encrypting the first random number, the second random number, and the device identifier of the second device; and
after successfully authenticating the second device based on the first authentication information, sending, by the first device, second authentication information to the second device, wherein the second authentication information comprises one or more of the following: a device identifier of the first device or second encrypted information, the second encrypted information is obtained by encrypting the second random number and the device identifier of the first device, and the second device is configured to authenticate the first device based on the second authentication information.

4. The method according to claim 3, wherein the first encrypted information is obtained by encrypting a module identifier of a first optical module, the first random number, the second random number, and the device identifier of the second device, the first optical module is an optical module that is located on the link and connected to the second device, and the method further comprises:
decrypting, by the first device, the first encrypted information to obtain the module identifier of the first optical module;
when determining, based on the module identifier of the first optical module, that the first optical module is legitimate, encrypting, by the first device, the first random number, the second random number, the device identifier of the second device, and the module identifier of the first optical module to obtain third encrypted information; and
successfully authenticating, by the first device, the second device when the first encrypted information is the same as the third encrypted information.

5. The method according to claim 4, wherein the second encrypted information is obtained by encrypting a module identifier of a second optical module, the second random number, and the device identifier of the first device, and the second optical module is an optical module that is located on the link and connected to the first device.

6. The method according to any one of claims 3 to 5, wherein the receiving, by the first device, the first authentication information sent by the second device comprises:
receiving, by the first device, at least one first multiframe sent by the second device, wherein the at least one first multiframe carries the first authentication information.

7. The method according to claim 6, wherein each of the at least one first multiframe comprises m alignment markers AMs, m is an integer greater than 1, and a bit that carries the first authentication information is an idle reserved bit comprised in a 2^{nd} AM to an m^{th} AM in each first multiframe.

8. The method according to any one of claims 1 to 7, wherein the security handling operation comprises key agreement, a result obtained by performing key agreement between the first device and the second device comprises a first key, and the first key is an encryption/decryption key for data transmitted between the first device and the second device; and
a result obtained by re-performing key agreement between the first device and the second device comprises a second key, and the encryption/decryption key for data transmitted between the first device and the second device changes from the first key to the second key.

9. The method according to claim 8, wherein the re-performing, by the first device, the security handling operation with the second device based on the first moment comprises:
re-performing, by the first device, key agreement with the second device at the first moment;
if monitoring, at the second moment, that the status of the link has changed to the online state, re-performing, by the first device, key agreement with the second device, wherein the second moment is later than the first moment, and the time difference between the first moment and the second moment is the specified difference; or
if monitoring, at the second moment, that the status of the link is still the offline state, re-performing, by the first device, key agreement with the second device when monitoring, after the second moment, that the status of the link changes to the online state.

10. The method according to claim 8 or 9, wherein the performing, by the first device, the security handling operation with the second device comprises:
sending, by the first device, a first priority to the second device, wherein the first priority is a priority of the first device;
receiving, by the first device, a second priority sent by the second device, wherein the second priority is a priority of the second device;
generating, by the first device, the first key when the first priority is higher than the second priority; and
sending, by the first device, the first key to the second device.

11. The method according to claim 10, wherein the sending, by the first device, the first priority to the second device comprises:
sending, by the first device, at least one second multiframe to the second device, wherein the at least one second multiframe carries the first priority.

12. The method according to claim 11, wherein each of the at least one second multiframe comprises n AMs, n is an integer greater than 1, and a bit that carries the first priority is an idle reserved bit comprised in a 2^{nd} AM to an n^{th} AM in each second multiframe.

13. A security handling apparatus, wherein the apparatus comprises:
a processing unit, configured to perform a security handling operation with a second device, wherein the security handling operation comprises one or more of the following operations: mutual authentication or key agreement; and
a monitoring unit, configured to: after the security handling operation is successfully performed, monitor a status of a link between the apparatus and the second device, wherein
the processing unit is further configured to re-perform the security handling operation with the second device based on a first moment, wherein the first moment is a moment at which it is monitored that the status of the link changes from an online state to an offline state.

14. The apparatus according to claim 13, wherein the security handling operation comprises mutual authentication, and the processing unit is configured to:
re-perform mutual authentication with the second device at the first moment;
if the status of the link has changed to the online state at a second moment, re-perform mutual authentication with the second device, wherein the second moment is later than the first moment, and a time difference between the first moment and the second moment is a specified difference; or
if the status of the link is still the offline state at the second moment, re-perform mutual authentication with the second device when it is monitored, after the second moment, that the status of the link changes to the online state.

15. The apparatus according to claim 13 or 14, wherein the apparatus comprises a first sending unit and a first receiving unit;
the first sending unit is configured to send a first random number to the second device;
the first receiving unit is configured to receive first authentication information sent by the second device, wherein the first authentication information comprises one or more of the following: a second random number of the second device, a device identifier of the second device, or first encrypted information, and the first encrypted information is obtained by encrypting the first random number, the second random number, and the device identifier of the second device; and
the first sending unit is configured to: after the processing unit successfully authenticates the second device based on the first authentication information, send second authentication information to the second device, wherein the second authentication information comprises one or more of the following: a device identifier of the apparatus or second encrypted information, the second encrypted information is obtained by encrypting the second random number and the device identifier of the apparatus, and the second device is configured to authenticate the apparatus based on the second authentication information.

16. The apparatus according to claim 15, wherein the first encrypted information is obtained by encrypting a module identifier of a first optical module, the first random number, the second random number, and the device identifier of the second device, the first optical module is an optical module that is located on the link and connected to the second device, and the processing unit is configured to:
decrypt the first encrypted information to obtain the module identifier of the first optical module;
when determining, based on the module identifier of the first optical module, that the first optical module is legitimate, encrypt the first random number, the second random number, the device identifier of the second device, and the module identifier of the first optical module to obtain third encrypted information; and
when the first encrypted information is the same as the third encrypted information, successfully authenticate the second device.

17. The apparatus according to claim 16, wherein the second encrypted information is obtained by encrypting a module identifier of a second optical module, the second random number, and the device identifier of the apparatus, and the second optical module is an optical module that is located on the link and connected to the apparatus.

18. The apparatus according to any one of claims 15 to 17, wherein the first receiving unit is configured to receive at least one first multiframe sent by the second device, wherein the at least one first multiframe carries the first authentication information.

19. The apparatus according to claim 18, wherein each of the at least one first multiframe comprises m AMs, m is an integer greater than 1, and a bit that carries the first authentication information is an idle reserved bit comprised in a 2^{nd} AM to an m^{th} AM in each first multiframe.

20. The apparatus according to any one of claims 13 to 19, wherein the security handling operation comprises key agreement, a result obtained by performing key agreement between the processing unit and the second device comprises a first key, and the first key is an encryption/decryption key for data transmitted between the apparatus and the second device; and
a result obtained by re-performing key agreement between the processing unit and the second device comprises a second key, and the encryption/decryption key for data transmitted between the apparatus and the second device changes from the first key to the second key.

21. The apparatus according to claim 20, wherein the processing unit is configured to:
re-perform key agreement with the second device at the first moment;
if it is monitored, at the second moment, that the status of the link has changed to the online state, re-perform key agreement with the second device, wherein the second moment is later than the first moment, and the time difference between the first moment and the second moment is the specified difference; or
if it is monitored, at the second moment, that the status of the link is still the offline state, re-perform key agreement with the second device when it is monitored, after the second moment, that the status of the link changes to the online state.

22. The apparatus according to claim 20 or 21, wherein the apparatus further comprises a second sending unit and a second receiving unit;
the second sending unit is configured to send a first priority to the second device, wherein the first priority is a priority of the apparatus;
the second receiving unit is configured to receive a second priority sent by the second device, wherein the second priority is a priority of the second device;
the processing unit is configured to generate the first key when the first priority is higher than the second priority; and
the second sending unit is further configured to send the first key to the second device.

23. The apparatus according to claim 22, wherein the second sending unit is configured to send at least one second multiframe to the second device, wherein the at least one second multiframe carries the first priority.

24. The apparatus according to claim 23, wherein each of the at least one second multiframe comprises n alignment markers AMs, n is an integer greater than 1, and a bit that carries the first priority is an idle reserved bit comprised in a 2^{nd} AM to an n^{th} AM in each second multiframe.

25. A security handling device, comprising at least one processor, wherein the at least one processor is configured to be coupled to a memory, and read and executes instruction in the memory, to implement the method according to any one of claims 1 to 12.

26. A computer-readable storage medium, wherein the computer-readable storage medium stores a computer program; and when the computer program is executed by a computer, the method according to any one of claims 1 to 12 is implemented.

27. A computer program product, comprising a computer program, wherein when the computer program is executed by a processor, the method according to any one of claims 1 to 12 is implemented.
